(19) Europäisches Patentamt
European Patent Office
Office européen des brevets

(11) Publication number: 0 134 664 B1

(12) **EUROPEAN PATENT SPECIFICATION**

(45) Date of publication of patent specification: 09.11.88

(51) Int. Cl.⁴: G 21 F 9/00

(21) Application number: 84304726.7

(22) Date of filing: 11.07.84

# (54) Improvements in or relating to the ozone oxidation of deposits in cooling systems of nuclear reactors.

(30) Priority: 12.07.83 US 513134

(43) Date of publication of application: 20.03.85 Bulletin 85/12

(45) Publication of the grant of the patent: 09.11.88 Bulletin 88/45

(84) Designated Contracting States: BE CH DE FR GB IT LI SE

(56) References cited:
DE-A-2 358 683
FR-A-2 347 752
US-A-4 287 002

(73) Proprietor: WESTINGHOUSE ELECTRIC CORPORATION
Westinghouse Building Gateway Center
Pittsburgh Pennsylvania 15235 (US)

(72) Inventor: Murray, Alexander Peter
3943 Hickory Hill Road
Murrsyville Pennsylvania (US)
Inventor: Becker, Lawrence Frederick, Jr.
2459 Scenic Ridge Drive
North Huntingdon Pennsylvania (US)
Inventor: Slater, Clifton Greene
116 Angela Drive
Pittsburgh Pennsylvania (US)
Inventor: Skriba, Michael Charles
13 Biscayne Road
Pittsburgh Pennsylvania (US)

(74) Representative: van Berlyn, Ronald Gilbert
23, Centre Heights
London, NW3 6JG (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to the ozine oxidation of deposits in cooling systems of nuclear reactors.

The cooling systems of nuclear reactors tend to become coated with various radioactive deposits. While these deposits are not thick enough to plug the cooling systems, they do present a radiation hazard to personnel who must perform maintenance and repair work on them. Thus, it is necessary to remove the deposits in order to reduce the radioactivity to a level that is safe for personnel in the area. The deposits are conventionally removed by circulating through the cooling system a decontamination solution which solubilizes metal ions, and an oxidizing solution which oxidizes insoluble chromium oxides to the soluble dichromate ion. A typical decontamination solution consists of citric acid, oxalic acid, and a chelate, such as ethylenediaminetetraacetic acid (EDTA). A typical oxidizing solution consists of an alkali metal hydroxide and a permanganate.

U.S. Patent Specification No. 4,287,002 discloses the decontamination of the cooling systems of nuclear reactors using ozine instead of alkali permanganate. A decontamination-oxidation-decontamination process is disclosed using ion exchange resins to remove ions from the solutions.

Ozone offers several advantages over the alkali-permanganate in that it decomposes into oxygen and does not leave any ions remaining in the system, in additon to being an excellent oxidant. However, there are several disadvantages in using ozone as well, the principal one being its instability. This means that if the ozone must travel through a rather long cooling system, most of it will decompose before it reaches the end of the cooling system and the deposits in those portions of the cooling system will be insufficiently oxidized and will not be adequately removed.

FR—A—2347752 mentions decontamination using a cerium (IV) compound of which the example given is cerium nitrate.

Accordingly, the present invention resides in a process for oxidizing chromium in deposits in the cooling system of a nuclear reactor as claimed in claim 1 and a process for decontaminating the cooling system of a nuclear reactor as claimed in claim 5.

We have thus discovered that the stability of an aqueous ozone oxidation solution for use in decontaminating the cooling systems of nuclear reactors can be greatly improved by the addition of a water-soluble cerium IV compound of a water-soluble aromatic compound having ketone groups on the aromatic ring, or both. Because the stability and solubility of the ozone are improved, the oxidizing power of the solution is not depleted in the remote reaches of the cooling system, and the oxidizing solution is more effective in removing the chromium from the deposits. This results in a high decontamination factor (i.e., the radioactivity before treatment divided by the radioactivity after treatment) during the subsequent decontamination solution treatment.

This invention applies to the cooling system of any nuclear reactor including pressurized water reactors, boiling water reactors, and high temperature gas nuclear reactors. The invention can be used on the deposits in the entire cooling system of a reactor using the aqueous coolant that is already present, or a special aqueous solution can be made up which is then circulated through any portion of the cooling system, such as the stream generator.

The oxidizing solution used in this invention contains water, ozone, and either a water-soluble cerium IV compound or a water-soluble aromatic compound having ketone groups on the aromatic ring. Prefeably, for maximum effectiveness, both the cerium IV compound and the aromatic compound are present. The ozone is dissolved in the water by sparging, which can produce a concentration of the ozone in the water from about $2 \times 10^{-4}$% (all percentages herein are by weight based on total solution weight) up to about saturation. No pH adjustment is necessary to the solution, but the pH will always be less than 7 because the components of the solution are acidic. The pH should not be permitted to rise to above 7 as that will result in the rapid decomposition of the ozone.

The water-soluble cerium IV compound can be ceric ammonium nitrate, ceric sulfate, ceric ammonium sulfate, and ceric sulfamate. The preferred compound is ceric ammonium nitrate because it is readily available, inexpensive, and very soluble in water. The cerium IV compound performs the function of oxidizing the chromium in the deposits in the cooling systems of the nuclear reactors, which reduces the cerium IV ion to a cerium III ion:

$$11H_2O + 6Ce^{+4} + Cr_2O_3 \text{ P } 2H_2CrO_4 + 6Cc^{+3}6H_3O^{+}$$

Because the cerium IV compound is more stable than the ozine, it oxidizes the chromium father away from the point of injection of the ozone into the cooling system, and is itself reduced to cerium III. When the cerium III compound returns to the point of injection of the ozone, the ozone oxidizes it back to cerium IV, thus regenerating it:

$$6H_3O^{+} + O_3 + 6Ce^{+3} \text{ P } 6Ce^{+}4 + 9H_2O$$

From 0.01 to 0.5% of the water-soluble cerium IV compound can be used in the solution. If less is used, the solution will be less effective as there will be insufficient cerium IV compound to couple with the ozone, and more is unnecessary, wasted, and gives rise to large waste volumes. The preferred amount is from 0.08 to 0.12%.

The water-soluble aromatic compound may be any aromatic compound that is water soluble and has at least one ketone group on an aromatic ring. Suitable aromatic compounds include naphthoquinone and quinone. Quinone is preferred as it readily forms an inclusion compound with ozone

which increases the stability of the ozone and also increases it solubility. The amount of water-soluble aromatic compound in the solution can be from 0.01 and 0.5%. Less is ineffective and more is unnecessary and wasted. The preferred amount is from 0.05 to about 0.1.

If the process of this invention is to be applied to the colling system of a power reactor with the aqueous coolant in place, the reactor should first be shut down, which results in a lowering of the temperature of the coolant to from 60 to 200°C. In order to obtain the most effective decontamination of the cooling system, it is preferable to use a decontamination solution followed by an oxidizing solution followed by a decontamination solution. Thus, the first step in the process would be the additon of a decontamination composition to the coolant. Suitable decontamination compositoins are well known in the art and typically consist of a mixture of organic acids, such as citric acid and oxalic acid, with organic chelates such as ethylene diaminetetraacetic acid. The coolant, containing the decontamination composition, is circulated between the cooling system where radioactive contaminating metal ions are dissolved and a cation exchange resin which removed the metal ions from the solution. The circulation is continued until the radioactivity in the coolant leaving the cooling system is not substantially greater than the radioactivity of the coolant entering the cooling system. The decontamination composition is then removed from the coolant by passing the coolant through an anion exchange resin.

The temperature of the coolant is then lowered to from 40 to 100°C. Lower temperatures are difficult to achieve and higher temperatures will result in the decomposition of the ozone. The ozone, cerium compound, and/or the aromatic compound are then added to the coolant in amounts sufficient to give the concentrations specified. The coolant is then circulated until the chromium concentration in the coolant leaving the cooling system is not substantially greater than the chromium concentration in the coolant entering the cooling system.

The temperature of the coolant is then raised to over 100°C in order to decompose the ozone. The coolant is passed through an ion exchange resin which contains an anion resin, such as an anion exchange resin or mixed anion/cation exchange resin, in order to remove the anions in the solution. The temperature of the cooling is then adjusted to from 60 to 200°C and the decontamination composition is again added and circulated through a cation exchange resin until the radioactivity level stabilizes. The decontamination composition is then removed from the coolant by passing the cooling through an anion exchange resin. This completes the decontamination of the cooling system.

If a portion of the cooling system, such as the steam generator, it to be decontaminated, it is drained and the decontamination solution and oxidizing solutions are made up in tanks and are passed through that portion of the cooling system with water rinses in between. Otherwise, the procedure is identical.

**Claims**

1. A process for oxidizing chromium in deposits in the cooling system of a nuclear reactor using an aqueous solution of ozone characterized by circulating through said system an aqueous solution of ozone having a pH of less than 7 and containing either (a) 0.01 to 0.5% of at least one cerium IV compound selected from ceric ammonium nitrate, ceric sulfate, ceric ammonium sulfate and ceric sulfamate, (b) 0.01 to 0.5% of at least one water-soluble aromatic compound having at least one ketone group on an aromatic ring, or (c) mixtures of (a) and (b), and injecting ozone into said solution as it circulates through said cooling system.

2. A process according to claim 1, characterized in that the aromatic compound is quinone and/or napthoquinone.

3. A process according to claim 1 or 2, characterized in that the solution comprises the aqueous coolant of the nuclear reactor.

4. A process according to any of claims 1 to 3, characterized in that the cooling system is in the stream generator of a pressurized water reactor.

5. A process for decontaminating the cooling system of a nuclear reactor characterized by the steps of shutting down said reactor, adding a decontamination composition to the coolant in said cooling system, circulating said coolant between a cation exchange resin and said cooling sytem until the radioactivity in said coolant leaving said cooling system in not substantially greater than the radioactivity of said coolant entering said cooling system, removing said decontamination composition from said coolant by passing said coolant through an anion exchange resin, adjusting the temperature of said coolant to from 40 to 100°C, performing the process according to any preceding claim, circulating said coolant in said cooling system until the chromium concentration no longer increases substantially, raising the temperature of said coolant to at least 100°C, passing said coolant through an ion exchange resin containing an anion resin, adjusting the temperature of said coolant to from 60 to 200°C, and repeating the second, third and fourth steps.

6. A process according to claim 5, characterized in that the decontamination composition is an organic acid and a chelate.

**Patentansprüche**

1. Ein Prozeß zur Oxidation von Chrom in Ablagerungen im Kühlsystem eines Nuklearreactors unter Verwendung einer wässrigen Lösung von Ozon, gekennzeichnet durch Hindurchzirkulieren einer wässrigen Lösung von Ozon durch das System, die ein pH-Wert von weniger als 7 besitzt und entweder (a) 0.01 bis 0,5% von zumin-

dest einer Cerium-IV-Verbindung enthält, ausgewählt aus Cerium-Ammoniumnitrat, Cerium-Sulfat, Cerium-Ammoniumsulfat und Cerium-Sulfamat, (b) 0.01 bis 0,5% von zumindest einer wasserlöslichen aromatischen Verbindung, die zumindest eine Ketongruppe auf einem aromatischen Ring besitzt, oder (c) Mischungen von (a) und (b), und injizieren von Ozon in die Lösung, während sie durch das Kühlzystem zirkuliert.

2. Ein Prozeß nach Anspruch 1, dadurch gekennzeichnet, daß die aromatische Verbindung Chinon und/oder Naphtochinon ist.

3. Ein Prozeß nach Anspruch 1 oder 2, dadurch gekennzeichnet, daß die Lösung das wässrige Kühlmittel eines Nuklearreaktors umfaßt.

4. Ein Prozeß nach einem der Ansprüche 1 bis 3, dadurch gekennzeichnet, daß das Kühlsystem in dem Strömungsgenerator eines Druckwasserreaktors ist.

5. Ein Prozeß zur Dekontaminierung des Kühlsystems eines Nuklearreacktors, gekennzeichnet durch die Schritte: Abschalten des Reaktors, Hinzufügen einer Dekontaminationszusammensetzung zu dem Kühlmittel in dem Kühlsystem, Zirkulieren des Kühlmittels zwischen einem Cationenaustauscherharz und dem Kühlsystem, bis die Radioaktivität in dem Kühlmittel, ds das Kühlsystem verläßt, nicht wesentlich größer ist, als die Radioaktivität des Kühlmittels, das in das Kühlsystem eintritt, Entfernen der Dekontaminationszusammensetzung von dem Kühlmittel durch Hindurchführen des Kühglmittels durch ein Anionenaustauscherharz, Einstellen der Temperatur des Kühlmittels auf 40 bis 100°C, Durchführen des Prozesses gemäß einem der vorhergehenden Ansprüche, Zirkulieren des Kühlmittels in dem Kühlsystm, bis die Chromkonzentration sich nicht mehr wesentlich erhöht, Anheben der Temperatur des Kühlmittels auf zumindest 100°C, Hindurchführen des Kühlmittels durch ein Ionenaustauscherharz, das ein Anionenharz enthält, Einstellen der Temperatur des Kühlmittels auf 60 bis 200°C, und Widerholen der zweiten, dritten und vierten Schritte.

6. Ein Prozeß nach Anspruch 5, dadurch gekennzeichnet, daß die Dekontaminationszusammensetzung eine organische Säure und ein Chelat ist.

**Revendications**

1. Procédé d'oxydation du chrome dans des dépôts du sytème de refroidissement d'un réacteur nucléaire en utilisant une solution aqueuse d'ozone, processus caractérisé en ce qu'il consiste à faire circuler dans le système une solution aqueuse d'ozone présentant un pH inférieur à 7 et contenant soit (a) 0.01 à 0,5% d'au moins un composé de cérium IV choisi parmi le nitrate d'ammonium cérique, le sulfate cérique, le sulfate d'ammonium cérique et le sulfamate cérique, (b) 0,01 à 0,5% d'au moins un composé aromatique soluble dans l'eau présentant au moins un groupe de kétones sur une chaîne aromatique, ou (c) des mélanges de (a) et (b), et à injecter l'ozone dans cette solution lorsqu'elle circuler dans le système de refroidissement.

2. Procédé selon la revendication 1, caractérisé en ce que le composé aromatique est de la quinone ou de la naphtoquinone.

3. Procédé selon l'une quelconque des revendications 1 et 2, caractérisé en ce que la solution est constituée par le liquide réfrigérant aqueux du réacteur nucléaire.

4. Procédé selon l'une quelconque des revendictions 1 à 3, caractérisé en ce que le système de refroidissement se trouve dans le générateur de vapeur d'un réacteur à eau sous pression.

5. Procédé de décontamination du système de refroidissement d'un réacteur nucléair, caractérisé en ce qu'il comprend les différentes étapes consistant à couper ce réacteur, à ajouter une composition de décontamination au liquide réfrigérant contenu dans le système de refroidissement, à faire circuler ce liquide réfrigérant entre une résine d'échange de cations et le système de refroidissement jusqu'à ce que la radioactivité du liquide réfrigérant soutant du système de refroidissement, ne soit pratiquement pas supérieure à la radioactivité du liquide réfrigérant entrant dans le système de refroidissement, à retirer la composition de décontamination du liquide réfrigérant en faisant passer ce liquide dans une résine d'échange d'anions, à régler la température du liquide réfrigérant entre 40 et 100°C, à effecteur le procédé selon l'une quelconque des revendications précédentes, à faire circuler le liquide réfrigérant dans le système de refroidissement jusqu'à ce que la concentration en chrome n'augmente plus notablement, à faire monter la température du liquide réfrigérant jusqu'à au moins 100°C, à faire passer ce liquide réfrigérant dans une résine d'échange d'ions contenant une résine d'anions, à régler la température du liquide réfrigérant entre 60 et 200°C, et à répéter la seconde, troisième et quatrième étape.

6. Procédé selon la revendication 5, caractérisé en ce que la composition de décontamination est un acide organique et un chélate.